(19) Europäisches Patentamt
European Patent Office
Office européen des brevets

(11) **EP 4 786 555 A1**

(12) **EUROPEAN PATENT APPLICATION**
published in accordance with Art. 153(4) EPC

(43) Date of publication:
**05.08.2026 Bulletin 2026/32**

(21) Application number: **24872292.8**

(22) Date of filing: **25.09.2024**

(51) International Patent Classification (IPC):
**C09J 7/21** (2018.01)    **C09J 7/38** (2018.01)
**C09J 7/40** (2018.01)    **C09J 107/00** (2006.01)

(52) Cooperative Patent Classification (CPC):
**C09J 7/21; C09J 7/38; C09J 7/40; C09J 107/00**

(86) International application number:
**PCT/JP2024/034215**

(87) International publication number:
**WO 2025/070506 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170938**

(71) Applicant: **Sekisui Chemical Co., Ltd.
Osaka-shi, Osaka 530-8565 (JP)**

(72) Inventors:
• **NARIMATSU, Kiyoshirou**
**Hasuda-shi, Saitama 349-0198 (JP)**
• **MATSUNAGA, Hidemi**
**Hasuda-shi, Saitama 349-0198 (JP)**
• **KAMIYA, Nobuto**
**Hasuda-shi, Saitama 349-0198 (JP)**

(74) Representative: **Ter Meer Steinmeister & Partner
Patentanwälte mbB
Nymphenburger Straße 4
80335 München (DE)**

(54) **ADHESIVE TAPE**

(57) An object of the present invention is to provide a pressure-sensitive adhesive tape that has suppressed adhesion to backing and excellent recyclability. The present invention is a pressure-sensitive adhesive tape comprising: a paper base material; an adhesive layer provided on one surface side of the base material; and a release layer provided on the other surface side of the base material, wherein the release layer comprises an aqueous polymer, and a sizing degree of the paper base material according to JIS P 8122:2004 is 15 seconds or more.

**EP 4 786 555 A1**

**Description**

Technical Field

The present invention relates to a pressure-sensitive adhesive tape including a paper base material.

Background Art

In recent years, recycling of packaging materials such as cardboard has been recommended from the viewpoint of environmental conservation. A pressure-sensitive adhesive tape is widely used in packaging materials to seal the inside, and the pressure-sensitive adhesive tape often adheres to the packaging materials after use. Therefore, among pressure-sensitive adhesive tapes used in the packaging materials, there is the pressure-sensitive adhesive tape that can be recycled together with a packaging material, such as kraft tape whose base material is made of paper, from the viewpoint of being capable of eliminating a step of peeling the pressure-sensitive adhesive tape when the packaging material is recycled.

For example, PTL 1 discloses, as a kraft pressure-sensitive adhesive tape that can be restored without leaving any residue while the kraft pressure-sensitive adhesive tape is still attached to the cardboard, a kraft pressure-sensitive adhesive tape that includes kraft paper as a base material, a releasing layer formed of a mixture of a water-soluble resin and a silicone emulsion provided on its one surface, and a water-soluble adhesive layer provided on the other surface.

PTL 2 discloses, as a pressure-sensitive adhesive tape having excellent recyclability when recycled together with a paper material such as a packaging material, a pressure-sensitive adhesive tape that includes a paper base material, an adhesive layer provided on one surface side of the base material, and a release agent layer provided on the other surface side of the base material, wherein an amount of residues in a disintegration test is 50% or less.

Citation List

Patent Literature

[0005]

　　PTL 1: JP H08-081661 A
　　PTL 2: JP 2021-107512 A

Summary of Invention

Technical Problem

From the viewpoint of reducing plastics, it is necessary to avoid using plastics, particularly polyethylene, in a sealing layer in the above-described pressure-sensitive adhesive tape. PTLs 1 and 2 disclose examples in which polyvinyl alcohol is used in the sealing layer.

However, when the sizing degree of the base material is low and the sealing agent permeates inside the base material, the pulp will not be sufficiently loosened when the pressure-sensitive adhesive tape is recycled, resulting in a problem that recyclability of the pressure-sensitive adhesive tape is decreased.

Furthermore, when the sealing agent permeates inside the base material, the sealing effect will be weakened, and the release agent will also be incorporated inside the base material, thereby increasing adhesion to backing. Therefore, it may lead to problems that defects such as paper picking and layer cracks occur when the pressure-sensitive adhesive tape, stored, for example, in a rolled state, is unfolded.

Therefore, an object of the present invention is to provide a pressure-sensitive adhesive tape that has suppressed adhesion to backing and excellent recyclability.

Solution to Problem

As a result of intensive studies, the present inventors have found that in a pressure-sensitive adhesive tape including a paper base material, an adhesive layer provided on one surface side of the paper base material, and a release layer provided on the other surface side of the paper base material, using paper base material having a sizing degree of equal to or higher than a certain value with a specific kind of sealing agent contained therein can solve the above problems.

That is, the present invention provides the following [1] to [10].

[1] A pressure-sensitive adhesive tape comprising: a paper base material; an adhesive layer provided on one surface side of the paper base material; and a release layer provided on the other surface side of the paper base material, the release layer comprising an aqueous polymer, and a sizing degree of the paper base material according to JIS P 8122:2004 being 15 seconds or more.

[2] The pressure-sensitive adhesive tape according to [1],
wherein the release layer is formed of a release agent layer comprising a release agent and a sealing layer comprising a sealing agent, or is formed of a release layer comprising both a sealing agent and a release agent, and the sealing agent is an aqueous polymer.

[3] The pressure-sensitive adhesive tape according to [2],
wherein a basis weight of the sealing layer is 20 g/m$^2$ or less.

[4] The pressure-sensitive adhesive tape according to [2] or [3],
wherein the release agent is a silicone-based release agent or a long-chain alkyl-based release agent.

[5] The pressure-sensitive adhesive tape according to any one of [1] to [4],
wherein the aqueous polymer is starch or a PVA resin.

[6] The pressure-sensitive adhesive tape according to any one of [1] to [5],
wherein the adhesive layer comprises a rubber-based adhesive.

[7] The pressure-sensitive adhesive tape according to [6],
wherein the rubber-based adhesive is natural rubber.

[8] The pressure-sensitive adhesive tape according to any one of [1] to [7],
wherein a biobased degree of a laminated body of the paper base material and the release layer is 85% or more.

[9] A structure comprising:
the pressure-sensitive adhesive tape according to any one of [1] to [8]; and a packaging material.

[10] A method for recycling the pressure-sensitive adhesive tape according to any one of [1] to [8] with the pressure-sensitive adhesive tape adhered to the packaging material.

Advantageous Effect of Invention

According to the present invention, it is possible to provide a pressure-sensitive adhesive tape that has suppressed adhesion to backing and excellent recyclability.

Brief Description of Drawings

[Fig. 1] Fig. 1 is a schematic view showing one embodiment of a pressure-sensitive adhesive tape of the present invention.
[Fig. 2] Fig. 2 is a schematic view showing one embodiment of a pressure-sensitive adhesive tape of the present invention.
[Fig. 3] Fig. 3 is an image showing a result of iodine dyeing of a paper base material in Example 1.
[Fig. 4] Fig. 4 is an image showing a result of iodine dyeing of a paper base material in Comparative Example 1.

Description of Embodiments

[Pressure-sensitive adhesive tape]

A pressure-sensitive adhesive tape of the present invention is a pressure-sensitive adhesive tape comprising: a paper base material; an adhesive layer provided on one surface side of the paper base material; and a release layer provided on the other surface side of the base material, wherein the release layer comprises an aqueous polymer, and a sizing degree of the paper base material according to JIS P 8122:2004 is 15 seconds or more.

(Paper base material)

The pressure-sensitive adhesive tape of the present invention includes a paper base material as a base material, and the paper base material has a sizing degree according to JIS P 8122:2004 (hereinafter simply referred to as "sizing degree") of 15 seconds or more. The release layer is formed by coating a coating liquid containing a sealing agent, followed by heating and drying. In a typical manufacturing facility, the coating liquid is heated and dried within 15 seconds from the completion of the coating, to thereby form the release layer. When the sizing degree is less than 15 seconds, the sealing agent contained in the release layer will easily permeate inside the paper base material, making it difficult to loosen the pulp when the pressure-sensitive adhesive tape is recycled, which possibly decreases recyclability. Moreover, when a sealing effect is weakened, the release agent also permeates inside the paper base material, which possibly increases adhesion to backing. The present inventors found a pressure-sensitive adhesive tape having excellent recyclability and suppressed adhesion to backing when adjusting the sizing degree of the paper base material to 15 seconds or more.

From the viewpoint of this, the sizing degree is preferably 18 seconds or more, and more preferably 20 seconds or more. Furthermore, due to the properties of the paper base material, in practice, the sizing degree is, for example, 45 seconds or less, preferably 40 seconds or less, and more preferably 37 seconds or less.

The above-described sizing degree is measured according to JIS P 8122:2004.

Moreover, the sizing degree can be estimated by a degree of the sealing agent that permeates inside the paper base material by a method such as dyeing the sealing agent, or analyzing the paper base material while it is shaven in a thickness direction. When the sizing degree of the paper base material is less than 15 seconds, it is found that the sealing agent permeates inside the paper base material. When the sizing degree of the paper base material is 15 seconds or more, the sealing agent does not permeate inside the paper base material, or the sealing agent is only slightly unevenly distributed on the surface side of the release layer of the paper base material.

Examples of the method for adjusting the above-described sizing degree include a method for adjusting the kind or content of the sizing agent. Examples of the sizing agent include, for example, sizing agents for acid papermaking, sizing agents for alkali papermaking, and sizing agents for neutral papermaking, and they may be used differently or in combination depending on their compatibility with other additives. Examples of the sizing agents for acid papermaking include, for example, reinforced rosin sizing agents, rosin emulsion sizing agents, and synthetic sizing agents. Examples of the sizing agents for alkali papermaking include alkyl ketene dimers, alkenyl succinic anhydrides, and cationic polymer sizing agents. Examples of the sizing agents for neutral papermaking include, for example, rosin-based neutral sizing agents.

The content of the sizing agent is, for example, 0.1 to 10 parts by mass, and preferably 0.3 to 3 parts by mass, relative to 100 parts by mass of the paper base material.

Examples of the paper base material include, for example, paper sheets such as kraft paper, glassine paper, and wood free paper. Among these, kraft paper is preferable.

Examples of the kraft paper include, for example, unbleached kraft paper, semi-bleached kraft paper, bleached kraft paper, and those that have been subjected to clupak processing to impart extensibility thereto, as well as those that have been subjected to wet strength processing to impart wet strength thereto.

The basis weight of the paper base material is not particularly limited, but is preferably 10 to 150 $g/m^2$, and more preferably 30 to 130 $g/m^2$. When the basis weight of the paper base material is equal to or higher than these lower limits, the strength of the pressure-sensitive adhesive tape increases, and when the basis weight of the paper base material is equal to or lower than these upper limits, the thickness of the pressure-sensitive adhesive tape can be thinner, which results in good workability.

(Release layer)

The pressure-sensitive adhesive tape of the present invention includes a release layer provided on a surface opposite to a surface, of the base material, on which the adhesive layer described hereinafter is provided. The release layer contains an aqueous polymer. When the release layer contains an aqueous polymer, the components of the release layer easily remain on the surface of the paper base material, and therefore the pressure-sensitive adhesive tape can have good recyclability and suppressed adhesion to backing. The aqueous polymer may be used as a sealing agent as described hereinafter.

Specific examples of the aqueous polymer include water-soluble polymers such as starch, polyvinyl alcohol resins (PVA resin), acrylic resins, carboxymethylcellulose, and the like, and water dispersible polymers such as aqueous latex and aqueous urethane. Among these, water-soluble polymers are preferably used, starch or PVA resins are more preferably used, and α starch or PVA resins are still more preferably used.

The release layer may be a multilayer structure composed of a release agent layer including a release agent and a sealing layer including a sealing agent, or may be a single layer structure composed of a release layer that includes both a sealing agent and a release agent. That is, the release layer may be composed of a layer that includes a release agent layer including a release agent and an aqueous polymer (aqueous polymer layer), or may be composed of a release layer that includes both an aqueous polymer and a release agent.

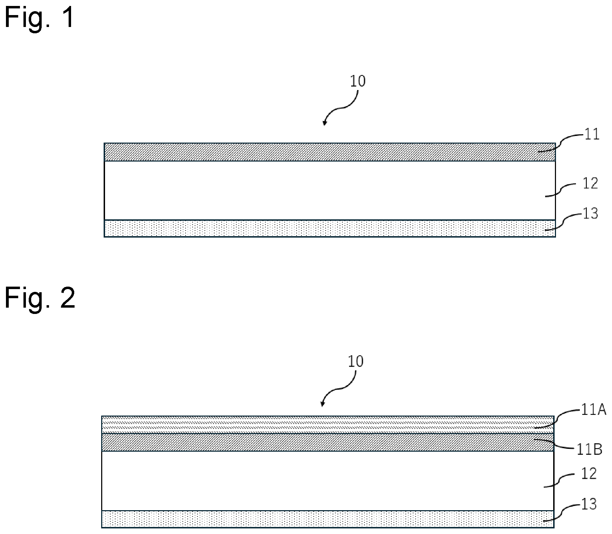

When the release layer is a single layer structure that includes both a sealing agent and a release agent, a pressure-sensitive adhesive tape 10 may include a release layer 11, a paper base material 12, and an adhesive layer 13 in this order, as shown in Fig. 1. When the release layer is a multilayer structure that is composed of a release agent layer and a sealing layer, the sealing layer is preferably provided on a side of a paper base material. That is, as shown in Fig. 2, a pressure-sensitive adhesive tape 10 preferably includes a release agent layer 11A, a sealing layer (aqueous polymer layer) 11B, a paper base material 12, and an adhesive layer 13 in this order.

Note that, in the present specification, the "release agent layer" is a layer constituting the release layer together with the sealing layer (aqueous polymer layer), which is a different concept from the release layer.

<Sealing agent (aqueous polymer)>

Since the sealing agent plays a role in causing the release agent to remain on the surface of the paper base material, use of the sealing agent can suppress adhesion to backing of the pressure-sensitive adhesive tape. As the sealing agent, the above-described aqueous polymer may be used.

Among the above-described aqueous polymers, examples of the $\alpha$ starch include, for example, starches or processed starches, which are obtained by heating, gelatinizing, and drying starches or processed starches in the presence of water so that starch is dissolved or swelled in water at normal temperature. The $\alpha$ starch may be not processed, or may be further processed for use. Examples of the kind of processing include conventionally known etherification, phosphoric-acid-crosslinking, acetylation, etherification, oxidation, and combinations thereof.

When $\alpha$ starch is used as the sealing agent (aqueous polymer), $\alpha$ starch obtained by heating and gelatinizing starch or processed starch in the presence of water can be used as the sealing agent (aqueous polymer), as described above. At this time, an aqueous solution after heating, which contains $\alpha$ starch, may be coated on a paper base material, to form a sealing layer (aqueous polymer layer), and a release agent layer may be formed thereon. Alternatively, the above-described aqueous solution and the release agent may be mixed, and a release layer having a single layer structure may be formed on the paper base material.

When $\alpha$ starch is used as the sealing agent (aqueous polymer), a commercially available $\alpha$ starch may be used. At this time, after a commercially available $\alpha$ starch may be dissolved in water and then the aqueous solution is coated on a paper base material, to form a sealing layer (aqueous polymer layer), and a release agent layer may be formed thereon. Alternatively, the above-described aqueous solution and the release agent may be mixed, and a release layer having a single layer structure may be formed on the paper base material.

Examples of the commercially available $\alpha$ starch include, for example, AMYCOL HF, AMYCOL C, AMYCOL KF, AMYCOL HG-N, AMYCOL BJ-2, AMYCOL W, STARCH MH-A, AMYCOL A, and AMYCOL FW (all of which are available from NIPPON STARCH CHEMICAL CO., LTD.), NISSHOKU ALSTER, NISSHOKU ALSTER H, and NISSHOKU WAXY $\alpha$ (all of which are available from NIHON SHOKUHIN KAKO CO., LTD.), CORN $\alpha$Y, CORN $\alpha$S-1, INDUSTRIAL TAPIOCA $\alpha$, INDUSTRIAL TAPIOCA $\alpha$TP-2, and WHEAT STARCH $\alpha$WA-105 (available from Sanwa Starch Co., Ltd.), and AMIROX No. 1 and AMIROX No. 1A (available from JAPAN CORN STARCH CO., LTD.).

The PVA resin can be obtained by polymerizing a vinylester to obtain a polymer according to the conventionally known method, and then saponifying, that is, hydrolyzing the polymer. An alkali or acid is generally used for saponification, but an alkali is preferably used. Only one kind of PVA resin may be used, or two or more kinds of PVA resins may be used in combination.

A derivative obtained by adding another monomer to a hydroxyl group of a polyvinyl alcohol that has undergone saponification may be used.

Examples of the vinylester include vinyl acetate, vinyl formate, vinyl propionate, vinyl butyrate, vinyl pivalate, vinyl versatate, vinyl laurate, vinyl stearate, and vinyl benzoate. The polymerization method of the vinylester is not particularly limited, and examples thereof include, for example, a solution polymerization method, a bulk polymerization method, and a suspension polymerization method.

The PVA resin may be unmodified PVA or may be modified PVA. Examples of the unmodified PVA include saponified polyvinyl esters. Examples of the modified PVA include saponified polymers of a vinylester and another unsaturated monomer.

Examples of another unsaturated monomer include monomers, which are monomers other than vinylesters and have a carbon-carbon double bond such as a vinyl group. Examples of such monomers include, for example, olefines, (meth)acrylic acid and salts thereof, (meth)acrylic acid esters, and unsaturated acids other than (meth)acrylic acid, salts and esters thereof, (meth)acrylamides, N-vinylamides, vinyl ethers, nitriles, vinyl halides, allyl compounds, vinylsilyl compounds, isopropenyl acetate, sulfonate group containing compounds, and amino group containing compounds.

A degree of saponification of the PVA resin is preferably 50 to 99.5 mol%, and more preferably 60 to 90 mol%, from the viewpoint of ensuring water solubility and increasing recyclability of the pressure-sensitive adhesive tape.

The above-described degree of saponification is measured according to JIS K6726. The degree of saponification indicates the proportion of units that are actually saponified into vinyl alcohol units to the units converted to vinyl alcohol units by saponification.

The method for adjusting the degree of saponification is not particularly limited. The degree of saponification can be appropriately adjusted depending on the saponification conditions, i.e., the hydrolysis conditions.

The degree of polymerization of the PVA resin is not particularly limited, and is, for example, 700 to 3000, preferably 1000 to 2500, and more preferably 1500 to 2000. When the degree of polymerization is equal to or higher than the above-described lower limits, adhesion to backing of the pressure-sensitive adhesive tape is easily suppressed.

Moreover, when the degree of polymerization is equal to or higher than the above-described lower limits, the sealing agent plays a role of reinforcing the paper base material, this prevents the pressure-sensitive adhesive tape from being ruptured due to its adhesive force and prevents a part of the pressure-sensitive adhesive tape from remaining on an adherend when the pressure-sensitive adhesive tape is peeled, and can be unlikely to cause defects such as paper picking and layer cracks when, for example, the pressure-sensitive adhesive tape in a rolled state is unfolded.

On the other hand, when the degree of polymerization is equal to or lower than the above-described upper limits, recyclability of the pressure-sensitive adhesive tape easily increases.

Examples of the aqueous latex include, for example, alkyd resins, acrylic resins, vinyl-based resins, cellulose-based resins, urethane-based resins, and polyester-based resins. When these aqueous latexes are also used, use of an aqueous latex having a relatively high molecular weight causes the sealing agent to reinforce the paper base material, and it is unlikely to cause defects such as paper picking and layer cracks when, for example the pressure-sensitive adhesive tape in a rolled state is unfolded.

The basis weight of the sealing layer (aqueous polymer layer) is preferably 20 $g/m^2$ or less, preferably 15 $g/m^2$ or less, preferably 10 $g/m^2$ or less, preferably 6 $g/m^2$ or less, more preferably 4 $g/m^2$ or less, and still more preferably 3 $g/m^2$ or less. When the basis weight of the sealing layer (aqueous polymer layer) is equal to or lower than the above-described upper limits, an environmental load is easily decreased. The basis weight of the sealing layer (aqueous polymer layer) is not particularly limited, and is preferably 0.3 $g/m^2$ or more, more preferably 0.5 $g/m^2$ or more, and still more preferably 0.8 $g/m^2$ or more, from the viewpoint of causing the release agent to remain on the surface of the paper base material and easily suppressing adhesion to backing.

<Release agent>

Examples of the release agent include, for example, silicone-based release agents, long-chain alkyl-based release agents, and fluorine-based release agents. Among these, silicone-based release agents or long-chain alkyl-based release agents are preferable. That is, the release agent layer preferably includes a silicone-based compound or a long-chain alkyl group containing compound as the release agent. Use of the silicone-based release agent easily suppresses adhesion to backing. Use of the long-chain alkyl-based release agent easily decreases an environmental load. In addition, the long-chain alkyl-based release agent is preferably an aqueous release agent that is an aqueous dispersion of the long-chain alkyl group containing compound.

In the long-chain alkyl group containing compound, the long-chain alkyl group is preferably an alkyl group having 8 or more carbon atoms. The number of carbon atoms may be 10 or more, and may be 12 or more. The long-chain alkyl group is preferably an alkyl group having 30 or less carbon atoms. The number of carbon atoms may be 28 or less, and may be 26 or less. Note that, the long-chain alkyl group containing compound preferably has a long-chain alkyl group at the side chain.

Examples of the long-chain alkyl group containing compounds include, for example, long-chain alkyl group containing polyvinyl resins, long-chain alkyl group containing alkyd resins, long-chain alkyl group containing acrylic resins, and long-chain alkyl group containing polyester resins. Among these, long-chain alkyl group containing polyvinyl resins are preferable.

When the release agent layer is formed, the basis weight of the release agent layer is not particularly limited, and is, for example, 0.1 $g/m^2$ or more and 10 $g/m^2$ or less, preferably 0.2 $g/m^2$ or more and 5 $g/m^2$ or less, and more preferably 0.3 $g/m^2$ or more and 2 $g/m^2$ or less.

The sealing layer (aqueous polymer layer) may be formed of the sealing agent (aqueous polymer), and an additive may be appropriately blended when necessary. The sealing layer may be formed by coating a sealing agent appropriately diluted in a solvent or the like on a surface opposite to a surface of the base material on which the adhesive layer is provided, followed by heating, drying, or the like when necessary.

Moreover, the release agent layer may appropriately contain an additive other than the above-described release agent, such as a photopolymerization initiator, inert particles, or an antioxidant. The release agent layer may be formed by forming a sealing layer on a surface of the base material, and then coating a release agent appropriately diluted in a solvent or the like on a surface of the sealing layer, followed by heating, drying, or the like when necessary.

When the release layer is formed of a single layer of the release layer that includes both the sealing agent (aqueous polymer) and the release agent, the release layer may be formed of a mixture formed of the sealing agent (aqueous polymer) and the release agent, and the above-described additive may be appropriately blended in the mixture. The release layer formed of a single layer may be formed by coating a coating liquid that contains the release agent and the sealing agent appropriately diluted in a solvent or the like on a surface opposite to a surface of the paper base material on which the adhesive layer is provided, followed by heating, drying, or the like when necessary. When the release layer includes both the sealing agent (aqueous polymer) and the release agent, an amount of the release agent used is, for example, 1 to 200 parts by mass, preferably 5 to 100 parts by mass, and more preferably 10 to 60 parts by mass, relative to 100 parts by mass of the sealing agent (aqueous polymer).

The basis weight of the release layer is not particularly limited, and is preferably 0.3 g/m$^2$ or more and 30 g/m$^2$ or less, preferably 0.4 g/m$^2$ or more and 25 g/m$^2$ or less, preferably 0.5 g/m$^2$ or more and 15 g/m$^2$ or less, preferably 0.6 g/m$^2$ or more and 8 g/m$^2$ or less, and more preferably 1 g/m$^2$ or more and 4.5 g/m$^2$ or less. When the release layer is formed of the sealing layer (aqueous polymer layer) and the release agent layer, the total of the basis weight of the sealing layer and the basis weight of the release agent layer is the basis weight of the release layer.

(Adhesive layer)

The pressure-sensitive adhesive tape of the present invention is provided with an adhesive layer on one surface side of the base material. The adhesive layer is a layer formed by an adhesive. The kind of adhesive is not particularly limited, and examples thereof include acrylic adhesives, rubber-based adhesives, urethane-based adhesives, and silicone-based adhesives. These may be used alone or in combination. Among these, rubber-based adhesives are preferable.

As the acrylic adhesive, it is possible to use acrylic polymers, which are copolymerizing, for example, various (meth)acrylic acid alkyl esters with monomers other than the (meth)acrylic acid alkyl esters, for example, monomers such as vinyl acetate and acrylonitrile, or monomers that contain functional groups, for example, carboxyl groups and hydroxy groups, such as (meth)acrylic acid and hydroxy acrylate.

The acrylic adhesive used in the adhesive layer may contain, in addition to the acrylic polymers, various additives that are conventionally used in the adhesives, such as tackifier resins, fine particles, crosslinking agents, plasticizers, softening agents, pigments, dyes, dispersants, photopolymerization initiators, fire retardants, antioxidants, and antiaging agents.

The rubber-based adhesive may contain a rubber component as a main component. Examples of the rubber component include synthetic rubbers such as styrene-isoprene block copolymer (SIS), ethylene-propylene rubber (EPDM), chloroprene rubber (CR), isoprene rubber, butyl rubber (IIR), butadiene rubber (BR), and chlorosulfonated polyethylene, and natural rubbers. Among these, natural rubbers are preferable. Use of a natural rubber easily decreases an environmental load. The natural rubber is preferably used in combination with a synthetic rubber such as SIS.

The rubber-based adhesive may contain a tackifier in addition to the above-described rubber components. The tackifier imparts tackiness to the rubber-based adhesive to thereby enhance tackiness performance of the adhesive layer. Examples of the tackifier include rosin-based resins, terpene-based resins, coumarone-indene resins, petroleum-based resins, and terpene-phenol resins. Among these, petroleum-based resins are preferable. The content of the tackifier in the adhesive is, for example, 20 to 200 parts by mass, and preferably 50 to 150 parts by mass, relative to 100 parts by mass of the rubber components.

The rubber-based adhesive may contain a softening agent in addition to the above-described tackifier. When the rubber-based adhesive contains a softening agent, the adhesive is softened to easily increase the coating property, tackiness performance, and the like. Examples of the softening agent include mineral oils (also referred to as process oil) such as paraffin oil and naphthene oil, liquid polybutene, liquid lanolin, liquid polyisoprene, and liquid polyacrylate. The content of the softening agent in the adhesive is, for example, 5 to 80 parts by mass, and preferably 10 to 50 parts by mass, relative to 100 parts by mass of the rubber components.

The rubber-based adhesive constituting the adhesive layer may appropriately contain, in addition to the above, a known additive used in adhesives, such as a filling agent, an antioxidant, an antiaging agent, an ultraviolet absorber, or a pigment.

Examples of the filling agent include, for example, calcium carbonate, zinc oxide (zinc white), silica, aluminum silicate, talc, diatomaceous earth, silica sand, pumice powder, slate powder, mica powder, asbestos, aluminum sol, alumina white, aluminum sulfate, barium sulfate, lithopone, calcium sulfate, molybdenum disulfide, graphite, glass fibers, glass ball, single crystal potassium titanate, carbon fibers, active zinc oxide, zinc carbonate, magnesium oxide, basic magnesium carbonate, litharge, read lead, white lead, calcium hydroxide, activated calcium hydroxide, and titanium oxide.

Among these filling agents, calcium carbonate, zinc oxide, silica, titanium oxide, and the like are preferable. When these filling agents are blended, aggregability can be appropriately imparted to the adhesive. The content of the filling agent in the adhesive is, for example, 0.1 to 150 parts by mass, preferably 1 to 100 parts by mass, and more preferably 3 to 80 parts by mass, relative to 100 parts by mass of the rubber components. When the content is 0.1 parts by mass or more, an addition effect of the filling agent can be achieved. When the content is 150 parts by mass or less, the filling agent can be appropriately added to the adhesive, and various physical properties of the pressure-sensitive adhesive tape are easily enhanced.

Examples of the antiaging agent include naphthylamine-based compounds, diphenylamine-based compounds, p-phenylenediamine-based compounds, other amine-based compounds, amine compound mixtures, quinoline-based compounds, hydroquinone derivatives, monophenol-based compounds, bisphenol-based compounds, trisphenol-based compounds, polyphenol-based compounds, and thiobisphenol-based compounds. The proportion of the antiaging agent blended is not particularly limited, and may be typically, for example, 0.1 to 5 parts by mass, and preferably 0.5 to 2 parts by mass, relative to 100 parts by mass of the rubber components in the rubber-based adhesive.

The basis weight of the adhesive layer is not particularly limited, and is preferably 3 to 50 g/m$^2$, and more preferably 10 to 40 g/m$^2$. When the basis weight of the adhesive layer is equal to or higher than the above-described lower limits, the adhesive force easily increases. When the basis weight of the adhesive layer is equal to or less than the above-described upper limits, the adhesive force can be obtained depending on the thickness.

The thickness of the adhesive layer is not particularly limited, and is preferably 10 to 150 $\mu$m, and more preferably 15 to 50 $\mu$m. When the thickness of the adhesive layer is equal to or higher than the above-described lower limits, the adhesive force easily increases.

(Adhesion to backing)

The adhesion to backing of the pressure-sensitive adhesive tape of the present invention is preferably 4 N/24 mm or less, more preferably 3 N/24 mm or less, still more preferably 2 N/24 mm or less, and even still more preferably 1.5 N/24 mm or less. In the case where the adhesion to backing is equal to or lower than the above-described upper limits, when, for example, the pressure-sensitive adhesive tape in a rolled state is unfolded, occurrence of defects such as paper picking and layer cracks is easily suppressed. The adhesion to backing is not particularly limited, but in practice, for example, 0.1 N/24 mm or more, preferably 0.3 N/24 mm or more, and more preferably 0.5 N/24 mm or more.

The adhesion to backing can be measured by bonding the pressure-sensitive adhesive tape on a surface of the paper base material on which the release layer is provided, leaving it to stand for a certain time, and then peeling the pressure-sensitive adhesive tape at a peeling rate of 30 m/min. The detailed procedure is as described in Examples.

(Product recycling ratio and pulp recovery ratio)

The product recycling ratio of the pressure-sensitive adhesive tape of the present invention is preferably 40% or more, more preferably 45% or more, and still more preferably 50% or more. The pulp recovery ratio is preferably 65% or more, more preferably 67% or more, and still more preferably 70% or more.

When the product recycling ratio and the pulp recovery ratio are equal to or higher than the above-described lower limits, the recyclability of the pressure-sensitive adhesive tape is said to be excellent. The higher the product recycling ratio is, the better it is. The product recycling ratio may be 100% or less, but in practice, for example, 80% or less, preferably 70% or less, and more preferably 65% or less. The higher the pulp recovery ratio is, the better it is. The pulp recovery ratio may be 100% or less, but in practice, for example, 90% or less, preferably 85% or less, and more preferably 80% or less.

Note that, both the product recycling ratio and the pulp recovery ratio can be calculated in the disintegration test. The detailed procedure is as described in Examples.

(Biobased degree)

The biobased degree of a laminated body of the paper base material and the release layer of the pressure-sensitive adhesive tape of the present invention is 85% or more, more preferably 90% or more, and still more preferably 95% or more. When the biobased degree is equal to or higher than the above-described lower limits, the recyclability of the pressure-sensitive adhesive tape is easily enhanced.

The biobased degree is a value measured according to ASTM D6866, and can be estimated from the content of the carbon isotope with mass of 14.

Regarding the biobased degree of the laminated body of the paper base material and the release layer, the biobased degree of the laminated body of the paper base material and the release layer may be typically measured, but when another layer exists between them, the biobased degree of the laminated body including that layer may be measured.

(Application)

The pressure-sensitive adhesive tape of the present invention is not particularly limited, and is preferably used for packaging materials, and more preferably used for application of sealing the inside of the cardboard. As described above, the pressure-sensitive adhesive tape of the present invention does not cause defects when, for example, the pressure-sensitive adhesive tape stored in a rolled state is unfolded. Therefore, the pressure-sensitive adhesive tape is excellent in the handling property when it is used for application of sealing the inside of the packaging materials, which can enhance an efficiency of the sealing work. Moreover, the pressure-sensitive adhesive tape of the present invention is excellent in recyclability, the packaging material can be recycled with the pressure-sensitive adhesive tape adhering to the packaging material, and a step of peeling the pressure-sensitive adhesive tape can be omitted when the packaging material is recycled.

[Structure and recycling method]

The present invention also provides a structure that includes the above-described pressure-sensitive adhesive tape and the packaging material, and its recycling method. The structure of the present invention preferably includes the above-described pressure-sensitive adhesive tape and the packaging material made of paper, and more preferably the above-described pressure-sensitive adhesive tape and cardboard. Since the above-described pressure-sensitive adhesive tape is excellent in recyclability, the structure of the present invention can be recycled without separating the pressure-sensitive adhesive tape from the packaging material. That is, in the present invention, both the pressure-sensitive adhesive tape and the packaging material can be recycled with the pressure-sensitive adhesive tape adhering to the packaging material, without peeling the pressure-sensitive adhesive tape from the packaging material.

Recycling may be performed in the same manner as recycling of the conventional used paper, and, for example, may be performed through disintegration in a disintegration apparatus such as a pulper. At this time, in this present invention, the pressure-sensitive adhesive tape adhering to the packaging material may be charged into a disintegration apparatus without separating the packaging material from the pressure-sensitive adhesive tape.

Examples

The present invention will be explained in more detail below with reference to Examples, but the present invention is not limited to these Examples.

[Physical properties]

The physical properties were measured and evaluated by the following methods.

(Sizing degree of paper)

The sizing degree of paper was measured according to JIS P 8122:2004.

(Adhesion to backing)

A pressure-sensitive adhesive tape (pressure-sensitive adhesive tape A), which was obtained in each of Examples and Comparative Examples and had an adjusted dimension of 25 mm × 200 mm, was provided. The pressure-sensitive adhesive tape A was fixed on an SUS plate via an adhesive layer, and another pressure-sensitive adhesive tape B was bonded on a surface of the fixed pressure-sensitive adhesive tape A on which the release layer was provided via the adhesive layer.

The pressure-sensitive adhesive tape B was bonded by taking out a test piece having a width of 25 mm and a length of 300 mm in the same manner, folding one end by 12 mm to form a tab so that the adhesive was in contact with the adhesive, and bonding the other end on one end of the tape whose back side was to be tested. The tape was then pressed back and forth twice using an automatic or manual roller in the vertical direction.

Then, it was left to stand for two days under an environment of 40°C and 50% RH. After this standing, the peeling force, which was measured by peeling the pressure-sensitive adhesive tape B at a peeling angle of 180° and a peeling rate of 30 m/min under an environment of 23°C and 50% RH, was measured as the adhesion to backing.

As the pressure-sensitive adhesive tape B, "Kraft tape No. 500" available from SEKISUI CHEMICAL CO., LTD. was used.

(Layer cracks)

In measuring the adhesion to backing, when the above-described pressure-sensitive adhesive tape B was peeled from the above-described pressure-sensitive adhesive tape A, layer cracks were evaluated based on the following evaluation criteria.

A: The material failure of the pressure-sensitive adhesive tape A did not occur from the start of peeling the pressure-sensitive adhesive tape B to the completion of the above-described peeling.
B: The material failure of the pressure-sensitive adhesive tape A occurred from the start of peeling the pressure-sensitive adhesive tape B to the completion of the above-described peeling.

(Biobased degree)

The biobased degrees of the base material and the release layer of the pressure-sensitive adhesive tape were measured according to ASTM D6866. The biobased degree of the release layer is a biobased degree of a laminated body of the release agent layer and the sealing layer.

(Residue ratio, product recycling ratio, and pulp recovery ratio)

The residue ratio, the product recycling ratio, and the pulp recovery ratio were measured and calculated by the disintegration test. The procedure of the disintegration test is shown as follows.

Thirty grams of the pressure-sensitive adhesive tape was added to 2000 mL of water, and was disintegrated at 25°C under the condition of the accumulated number of revolutions of a propeller of 3000 rpm using a standard disintegration machine according to JIS P8220-1, to form a pulp slurry. The pulp slurry was subjected to a flat screen treatment.

In the above disintegration test, the proportion of the undisintegrated product [100 × (mass of the undisintegrated product) / (mass of the pulp slurry treated in the disintegration test) (%)] was calculated, and this was considered as the residue ratio. The flat screen treatment was performed by using a flat screen equipped with a screen plate having a width of 0.3 mm under the conditions of the quantity of water of 8.6 liters/min and the treatment time of 20 minutes according to TAPPI T275.

The product recycling ratio was calculated by the following expression.

$$\text{Product recycling ratio (\%)} = 100 - \text{residue ratio (\%)}$$

However, in Examples 9 and 10, due to the large basis weight of the sealing layer, the pulp slurry after the flat screen treatment was filtered with filter paper to take the amount of the sealing layer content into consideration. The proportion of the collected pulp weight was calculated as [100 × (mass of the collected pulp) / (mass of the pulp slurry treated in the disintegration test) (%)], and this was defined as the product recycling ratio.

The pulp recovery ratio was calculated by the following expression.

Pulp recovery ratio (%) = product recycling ratio (%) / pulp content (% by weight) × 100

(Pulp content)

The pulp content was calculated by the following expression.

Pulp content (% by weight) = basis weight of paper (g/m$^2$) / basis weight of the whole tape (g/m$^2$)

[Components used]

The components used in Examples and Comparative Examples are as follows.

(Paper base material)

· Kraft paper: unbleached kraft paper, subjected to Clupak processing, wet strength processing and having a basis weight of 73 g/m$^2$. The unbleached kraft paper having a sizing degree appropriately adjusted by addition of a sizing agent was used.

(Release agent)

· Silicone-based release agent ("KNS-3051" available from Shin-Etsu Chemical Co., Ltd.)
· Long-chain alkyl-based release agent ("Rezemu K-256" available from Chukyo Yushi Co., Ltd.)

(Sealing agent)

· PVA resin 1: product obtained by charging PVA (average degree of polymerization 1700, degree of saponification 99 mol%) into water of normal temperature under stirring so as to have a solid content concentration of 15%, dispersing the PVA for 5 to 10 minutes, increasing the temperature, and then maintaining the temperature at 90 to 95°C for 30 minutes.

· α starch: product obtained by adding starch ("COATING STARCH PN-500" available from Sanwa Starch Co., Ltd.) to water of 90°C so as to have a solid content concentration of 20%, and maintaining the temperature of that mixture for 30 minutes, followed by gelatinization.

· Polyethylene resin ("SUNTECH LD" available from Asahi Kasei Corp.)

· Urethane ("HYDRAN HW-350" available from DIC)

· Latex ("Nipol LX110" available from Zeon Corporation)

Regarding the PVA resin 1 among the sealing agents, a diluted liquid was prepared by the composition shown in Table 1, and the prepared liquid was used for forming the sealing layer.

[Table 1]

| Diluted filler | Composition of diluted liquid (parts by mass) | |
| --- | --- | --- |
| | Filler | Water |
| PVA resin 1 | 15 | 85 |

(Adhesive layer)

As the adhesive composition for forming the adhesive layer, the following components were used. The following components were mixed in the compositions shown in Table 2, and the adhesive composition 1 for a synthetic rubber-based adhesive and the adhesive composition 2 for a natural rubber-based adhesive were prepared. The blended adhesive components were charged into a kneading-extrudability testing machine (product name "Labo Plastomill (registered trademark)" available from TOYO SEIKI SEISAKU-SHO, LTD.), melt-kneaded, extruded and molded, and then coated on the kraft paper, to produce the pressure-sensitive adhesive tapes of Examples and Comparative Examples.

[Table 2]

| | Component | Adhesive composition | |
| --- | --- | --- | --- |
| | | 1 (for synthetic rubber-based) | 2 (for natural rubber-based) |
| Composition of adhesive composition (parts by mass) | Styrene-isoprene-styrene block copolymer (available from JSR Corporation, product name "SIS5506") | 100 | 60 |
| | Natural rubber (RSS first grade, after mastication and pelletizing) | - | 40 |
| | Petroleum resin (available from Zeon Corporation, product name "Quintone A-100") | 120 | 120 |
| | Process oil (available from JXTG Nippon Oil & Energy Corporation, product name "Kurisefu oil F220") | 40 | 40 |
| | Calcium carbonate (available from Nitto Funka Kogyo K.K., NS#100) | 40 | 40 |
| | Antiaging agent (available from YOSHITOMI PHARMACEUTICAL INDUSTRIES, LTD., product name "YOSHINOX 425") | 1 | 1 |

[Example 1]

An α starch aqueous solution was coated on one surface of the paper base material formed of kraft paper having a basis weight of 70 g/m$^2$ so as to have a basis weight of 2 g/m$^2$, to form a sealing layer. A long-chain alkyl-based release agent was coated on the sealing layer so that a basis weight after drying was 0.5 g/m$^2$, followed by drying, to form a release agent layer. Next, an adhesive composition 2 was coated on a surface opposite to the surface of the base material on which the release agent layer and the sealing layer were formed, to form a natural rubber-based adhesive layer having a basis weight of 26 g/m$^2$, thereby obtaining a pressure-sensitive adhesive tape. The configurations of the pressure-sensitive adhesive tapes and the measurement results are shown in Table 3.

[Examples 2 to 7, 9, and 10, Comparative Examples 1 to 6, and Reference Example]

Pressure-sensitive adhesive tapes were obtained in the same manner as in Example 1 except that the kind of paper base material, the sealing layer, the release agent layer, and adhesive layer, and their basis weights, and the basis weight were changed as described in Tables 3 and 4. The configurations of the pressure-sensitive adhesive tapes and the measurement results are shown in Tables 3 and 4.

[Example 8]

A mixture liquid of an α starch aqueous solution and a long-chain alkyl-based release agent was coated on one surface of the paper base material formed of kraft paper having a basis weight of 70 g/m$^2$, to form a release layer of a single layer structure having a basis weight of 2.5 g/m$^2$. The mixture liquid was obtained by mixing the α starch aqueous solution and the long-chain alkyl-based release agent at a mixing ratio of 100:25(the α starch aqueous solution: the long-chain alkyl-based release agent).

Next, the adhesive composition 1 was coated on a surface of the base material opposite to a surface on which the release layer was formed, to form a synthetic rubber-based adhesive layer having a basis weight of 26 g/m$^2$, thereby obtaining a pressure-sensitive adhesive tape. The configurations of the pressure-sensitive adhesive tapes and the measurement results are shown in Table 3.

[Table 3]

| Item | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Whole basis weight | g/m² | 98 | 98 | 97 | 98 | 98 | 98 | 98 | 98 | 111 | 118 |
| Basis weight of adhesive | g/m² | 26 | 26 | 26 | 26 | 26 | 26 | 26 | 26 | 26 | 26 |
| Kind of adhesive | - | Natural rubber-based | Synthetic rubber-based | Synthetic rubber-based | Synthetic rubber-based | Synthetic rubber-based | Synthetic rubber-based | Synthetic rubber-based | Synthetic rubber-based | Synthetic rubber-based | Synthetic rubber-based |
| Water solubility of adhesive | - | None | None | None | None | None | None | None | なし | なし | なし |
| Basis weight of paper | g/m² | 70 | 70 | 70 | 70 | 70 | 70 | 70 | 70 | 70 | 70 |
| Sizing degree of paper | Second | 26 | 26 | 26 | 15 | 40 | 26 | 26 | 26 | 26 | 26 |
| Basis weight of filler | g/m² | 2 | 2 | 1 | 2 | 2 | 2 | 2 | 2 | 15 | 22 |
| Kind of filler | - | α starch | α starch | α starch | α starch | α starch | PVA 1 | α starch | α starch | α starch | α starch |
|  | - | Water-soluble | Water-soluble | Water-soluble | Water-soluble | Water-soluble | Water-soluble | Water-soluble | Water-soluble | Water-soluble | Water-soluble |
| Kind of release agent | - | Long-chain alkyl-based release agent | Long-chain alkyl-based release agent | Long-chain alkyl-based release agent | Long-chain alkyl-based release agent | Long-chain alkyl-based release agent | Long-chain alkyl-based release agent | Si-based release agent | Long-chain alkyl-based release agent | Long-chain alkyl-based release agent | Long-chain alkyl-based release agent |
| Adhesion amount of release agent | g/m² | 0.5 | 0.5 | 0.5 | 0.5 | 0.5 | 0.5 | 0.5 | 0.5 | 0.5 | 0.5 |
| Adhesion to backing (peeling rate 30 m/min) | N/24mm | 1.4 | 1.4 | 1.4 | 1.3 | 1.3 | 1.7 | 0.7 | 1.9 | 1.1 | 1.1 |
| Layer cracks | - | A | A | A | A | A | A | A | A | A | A |
| Biobased | % | 98 | 98 | 98 | 98 | 98 | 95 | 98 | 98 | 99 | 99 |

(continued)

| Item | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Residue ratio | % | 49 | 48 | 47 | 50 | 46 | 50 | 48 | 50 | 40 | 35 |
| Product recycling ratio | % | 51 | 52 | 53 | 50 | 54 | 50 | 52 | 50 | 45 | 45 |
| Pulp content | % | 71 | 71 | 72 | 71 | 71 | 71 | 71 | 71 | 63 | 59 |
| (Pulp recovery ratio) = collected pulp / whole pulp | % | 71 | 73 | 73 | 70 | 76 | 70 | 73 | 70 | 71 | 76 |

[Table 4]

| Item | Unit | Comparative Example 1 | Comparative Example 2 | Comparative Example 3 | Comparative Example 4 | Comparative Example 5 | Comparative Example 6 | Reference Example |
|---|---|---|---|---|---|---|---|---|
| Whole basis weight | $g/m^2$ | 98 | 99 | 99 | 99 | 101 | 101 | 106 |
| Basis weight of adhesive | $g/m^2$ | 26 | 26 | 26 | 26 | 26 | 26 | 26 |
| Kind of adhesive | - | Synthetic rubber-based | Synthetic rubber-based | Synthetic rubber-based | Synthetic rubber-based | Synthetic rubber-based | Synthetic rubber-based | Synthetic rubber-based |
| Water solubility of adhesive | - | None | None | None | None | None | None | None |
| Basis weight of paper | $g/m^2$ | 70 | 70 | 70 | 70 | 70 | 70 | 70 |
| Sizing degree of paper | Second | 0 | 0 | 0 | 0 | 0 | 0 | 26 |
| Basis weight of filler | $g/m^2$ | 2 | 3 | 3 | 3 | 5 | 5 | 10 |
| Kind of filler | - | α starch | PVA 1 | PVA 1 | Urethane | Latex | Latex | PE |
| Water solubility of filler | - | Water-soluble | Water-soluble | Water-soluble | Water-dispersible | Water-dispersible | Water-dispersible | Other than aqueous |
| Kind of release agent | - | Long-chain alkyl-based release agent | Long-chain alkyl-based release agent | Si-based release agent | Si-based release agent | Si-based release agent | Long-chain alkyl-based release agent | Long-chain alkyl-based release agent |
| Adhesion amount of release agent | $g/m^2$ | 0.5 | 0.5 | 0.5 | 0.5 | 0.5 | 0.5 | 0.5 |
| Adhesion to backing (peeling rate 30 m/min) | N/24mm | 5.5 | 3.0 | 2.1 | 1.9 | 2.3 | 8.0 | 1.8 |
| Layer cracks | - | B (occurrence) | A | A | A | A | A | A |
| Biobased | % | 98 | 95 | 95 | 95 | 98 | 98 | 80 |
| Residue ratio | % | 50 | 66 | 66 | 73 | 72 | 72 | 51 |
| Product recycling ratio | % | - | 34 | 34 | 27 | 28 | 28 | 49 |
| Pulp content | % | - | 71 | 71 | 71 | 69 | 69 | 66 |
| (Pulp recovery ratio) = collected pulp / whole pulp | % | - | 48 | 48 | 38 | 40 | 40 | 75 |

As it is clear from the above Examples, the pressure-sensitive adhesive tape satisfying the requirements of the present invention had excellent recyclability and could suppress adhesion to backing, which resulted in at least more excellent recyclability compared to the pressure-sensitive adhesive tape produced in Reference Example in which the polyethylene resin was used in the sealing agent.

On the other hand, the pressure-sensitive adhesive tape produced in Comparative Example 1 having the sizing degree of the paper base material of 0 allowed the sealing agent to permeate inside the paper base material and thus the release agent also permeated inside the paper base material, thereby increasing adhesion to backing. Therefore, layer cracks occurred.

The pressure-sensitive adhesive tapes produced in Comparative Examples 2 to 6 having the sizing degree of the paper base material of 0 allowed the sealing agent to permeated inside the paper base material and thus the pulp was not sufficiently disintegrated in the disintegration test, thereby decreasing recyclability.

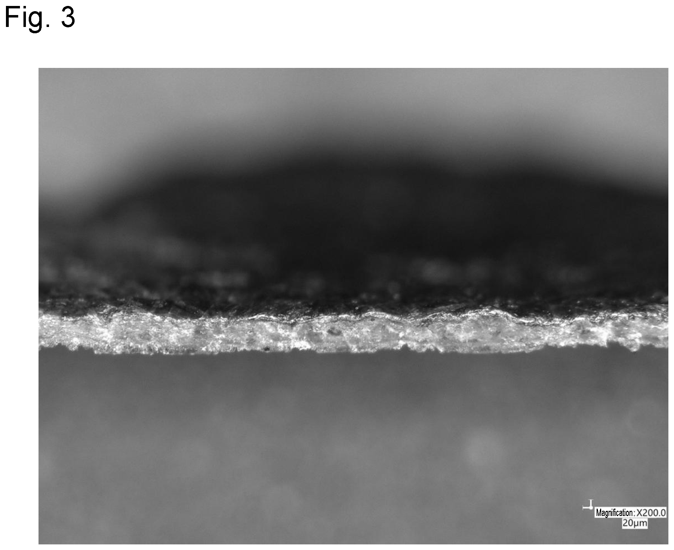

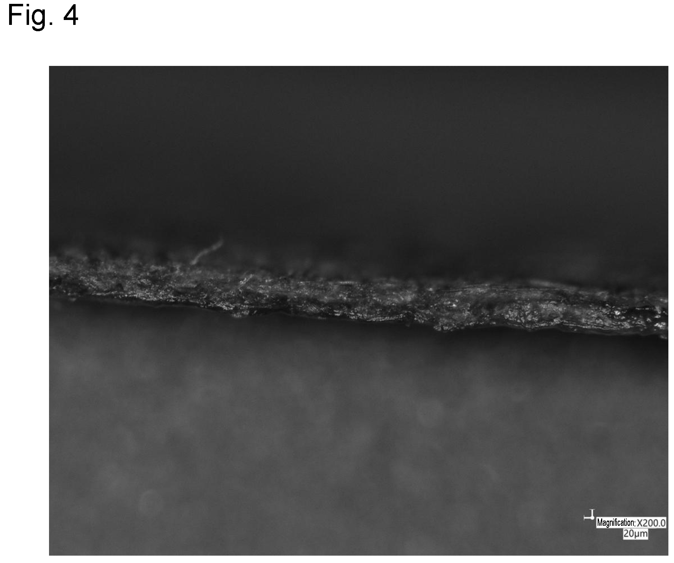

When the paper base materials of Example 1 and Comparative Example 1 were dyed by iodine, the surface side of the release layer of the paper base material of Example 1 was slightly dyed as shown in the image of Fig. 3. On the other hand, it was observed that the whole surface of the paper base material of Comparative Example 1 was dyed, and starch, which was the sealing agent, permeated, as shown in the image of Fig. 4.

**Claims**

1. A pressure-sensitive adhesive tape comprising:

    a paper base material;
    an adhesive layer provided on one surface side of the paper base material; and
    a release layer provided on the other surface side of the paper base material,
    the release layer comprising an aqueous polymer, and
    a sizing degree of the paper base material according to JIS P 8122:2004 being 15 seconds or more.

2. The pressure-sensitive adhesive tape according to claim 1,
    wherein the release layer is formed of a release agent layer comprising a release agent and a sealing layer comprising a sealing agent, or is formed of a release layer comprising both a sealing agent and a release agent, and the sealing agent is an aqueous polymer.

3. The pressure-sensitive adhesive tape according to claim 2,
    wherein a basis weight of the sealing layer is 20 g/m$^2$ or less.

4. The pressure-sensitive adhesive tape according to claim 2,
    wherein the release agent is a silicone-based release agent or a long-chain alkyl-based release agent.

5. The pressure-sensitive adhesive tape according to claim 1 or 2,
    wherein the aqueous polymer is starch or a PVA resin.

6. The pressure-sensitive adhesive tape according to claim 1 or 2,
    wherein the adhesive layer comprises a rubber-based adhesive.

7. The pressure-sensitive adhesive tape according to claim 6,
    wherein the rubber-based adhesive is natural rubber.

8. The pressure-sensitive adhesive tape according to claim 1 or 2,
    wherein a biobased degree of a laminated body of the paper base material and the release layer is 85% or more.

9. A structure comprising:

    the pressure-sensitive adhesive tape according to claim 1 or 2; and
    a packaging material.

10. A method for recycling the pressure-sensitive adhesive tape according to claim 1 or 2 with the pressure-sensitive adhesive tape adhered to the packaging material.

Fig. 1

10

11

12

13

Fig. 2

10

11A

11B

12

13

Fig. 3

Fig. 4

## INTERNATIONAL SEARCH REPORT

| International application No. |
| --- |
| **PCT/JP2024/034215** |

| A. | CLASSIFICATION OF SUBJECT MATTER |
| --- | --- |

*C09J 7/21*(2018.01)i; *C09J 7/38*(2018.01)i; *C09J 7/40*(2018.01)i; *C09J 107/00*(2006.01)i
FI:   C09J7/21; C09J7/38; C09J7/40; C09J107/00

According to International Patent Classification (IPC) or to both national classification and IPC

| B. | FIELDS SEARCHED |
| --- | --- |

Minimum documentation searched (classification system followed by classification symbols)

C09J1/00-201/10;B32B1/00-43/00;D21B1/00-1/38; D21C1/00-11/14; D21D1/00-99/00; D21F1/00-13/12; D21G1/00-9/00; D21H11/00-27/42; D21J1/00-7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 7-196994 A (SEKISUI CHEMICAL CO., LTD.) 01 August 1995 (1995-08-01) claims 2, 3, paragraphs [0001], [0007], [0014], [0027], [0028], [0040], [0046], [0047], fig. 2, table 1 | 1-10 |
| X | JP 8-81661 A (OKAMOTO IND INC.) 26 March 1996 (1996-03-26) comparative example 1, paragraphs [0006], [0013], [0015], tables 1, 2 | 1-2, 4-9 |
| A | | 3, 10 |
| X | JP 7-34040 A (SEKISUI CHEMICAL CO., LTD.) 03 February 1995 (1995-02-03) comparative examples 6, 7, paragraphs [0026], [0027], [0055]-[0058] | 1-8 |
| A | | 9-10 |
| X | JP 47-35068 B1 (NIPPON RIKA SEISHI KK) 04 September 1972 (1972-09-04) claims, page 2, left column, line 40 to right column, line 10, page 3, left column, line 43 to right column, line 30, examples 1 and 2, tables 1-3 | 1-2, 4-8 |
| A | | 3, 9-10 |

☑ Further documents are listed in the continuation of Box C.      ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 November 2024** | **10 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/034215** |

**C. DOCUMENTS CONSIDERED TO BE RELEVANT**

| Category* | Citation of document, with indication, where appropriate, of the relevant passages | Relevant to claim No. |
| --- | --- | --- |
| X | JP 7-102222 A (BEIERSDORF AKTIENGESELLSCHAFT) 18 April 1995 (1995-04-18) claim 2, paragraphs [0002], [0009], [0039], examples 1, 2 | 1-2, 4-5, 8-10 |
| A | | 3, 6-7 |
| A | JP 2001-123130 A (OJI PAPER CO.) 08 May 2001 (2001-05-08) claims, paragraphs [0004], [0013] | 1-10 |
| A | JP 2009-138133 A (OJI TAC HANBAI KK) 25 June 2009 (2009-06-25) claims, paragraphs [0013], [0014] | 1-10 |
| A | JP 2021-107512 A (SEKISUI CHEMICAL CO., LTD.) 29 July 2021 (2021-07-29) claims, paragraphs [0016], [0047], [0048] | 1-10 |

Form PCT/ISA/210 (second sheet) (July 2022)

## INTERNATIONAL SEARCH REPORT
### Information on patent family members

International application No.

**PCT/JP2024/034215**

| Patent document cited in search report | | | Publication date (day/month/year) | Patent family member(s) | Publication date (day/month/year) |
|---|---|---|---|---|---|
| JP | 7-196994 | A | 01 August 1995 | (Family: none) | |
| JP | 8-81661 | A | 26 March 1996 | (Family: none) | |
| JP | 7-34040 | A | 03 February 1995 | (Family: none) | |
| JP | 47-35068 | B1 | 04 September 1972 | (Family: none) | |
| JP | 7-102222 | A | 18 April 1995 | US 5624751 A<br>claim 8, 1st column, lines<br>6-12, 51-52, 2nd column, lines<br>36-47, examples 1 and 2<br>EP 641847 A2<br>DE 4330362 A | |
| JP | 2001-123130 | A | 08 May 2001 | (Family: none) | |
| JP | 2009-138133 | A | 25 June 2009 | (Family: none) | |
| JP | 2021-107512 | A | 29 July 2021 | US 2023/0046475 A1 | |

Form PCT/ISA/210 (patent family annex) (July 2022)

**EP 4 786 555 A1**

**REFERENCES CITED IN THE DESCRIPTION**

**Patent documents cited in the description**

- JP H08081661 A

- JP 2021107512 A